**Europäisches Patentamt**

**European Patent Office**

**Office européen des brevets**

(11) Publication number: **0 138 788**

**B1**

(12) **EUROPEAN PATENT SPECIFICATION**

(45) Date of publication of patent specification: **16.08.90**

(21) Application number: **84850272.0**

(22) Date of filing: **17.09.84**

(51) Int. Cl.⁵: **F 24 H 9/20,** F 24 D 19/10, G 05 D 23/00

(54) Control equipment for a heating boiler.

(30) Priority: **14.10.83 SE 8305661**

(43) Date of publication of application: **24.04.85 Bulletin 85/17**

(45) Publication of the grant of the patent: **16.08.90 Bulletin 90/33**

(84) Designated Contracting States: **AT CH DE FR IT LI**

(56) References cited:
**DE-A-2 025 677**
**DE-A-2 901 566**
**DE-B-2 108 976**
**LU-A- 49 861**

(73) Proprietor: **CTC Parca AB Box 313 S-341 26 Ljungby (SE)**

(72) Inventor: **Nilsson, Göran Buhult 1269A S-340 20 Liatorp (SE)**

(74) Representative: **Lundin, Björn-Eric Trelleborg AB Patents and Trade Marks Box 21024 S-100 31 Stockholm (SE)**

Courier Press, Leamington Spa, England.

## Description

The present invention relate to a boiler control device for adjusting the temperature of the liquid supplied to the radiators in an automatic control equipment of a heating boiler, comprising a regulator, a first sensor for sensing the outdoor temperature, and a second sensor for sensing the radiator supply temperature, both sensors being connected to the regulator which is arranged to actuate the shunt valve of the boiler, the radiator supply temperature being controlled in relation to the outdoor temperature according to a graph the inclination of which may be altered and which may be displaced in parallel from its normal position in relation to the construction and geographic location of the house, and climatic conditions.

In a heating plant, the shunt valve of the boiler which controls the supply of heat to the radiator supply line is often actuated by an automatic control equipment. This equipment is fed with signals from the connected sensors which sense the outdoor temperature, the room temperature, and the radiator supply temperature, respectively. It is common in such control that the radiator supply temperature follows a function of the outdoor temperature. This is most often assumed to be a straight line. The function of the line may be defined on the one hand by the factor of the change of the supply temperature/the change of the outdoor temperature, i.e. the inclination of the graph, and on the other hand by the supply temperature as a function of a predetermined outdoor temperature, e.g. 20°C, i.e. the parallel displacement of the graph from its normal position. The control equipment comprises two turn controls for the adjustment of these two functions: the inclination and the parallel displacement of the graph. Such an arrangement, however, which is e.g. described in DE—A—2 901 566, may imply difficulties in case an adjustment of both controls is necessary, such as when the graph is not a straight line and when the desired room temperature is not provided at a certain outdoor temperature. Since the positions of the turn controls are not mutually independent, the consumers will have problems in performing such an adjustment.

The object of the invention is therefore to provide a device by means of which these difficulties are avoided. The invention is generally characterized in that it comprises at least three indicator means each defining a predetermined interval of the outdoor temperature $(t_u)$, said indicator means being adopted to be actuated by the temperature sensed by the outdoor sensor for the respective interval and thereby indicating that the currently sensed outdoor temperature is within the interval associated therewith and at least three adjusting devices, one for each interval, and each adjusting device being only in function when the respective indicator indicating that the outdoor temperature lies within the interval associated with the adjusting device, each adjusting device comprising a slidable means, having an independently adjustable position for increasing or decreasing the supply temperature, the position corresponding to a point on a graph of the supply temperature $(t_f)$ as a function of the outdoor temperature $(t_u)$, so that the graph is formed by individual linear parts between neighbouring points, each linear part having an inclination independent of the other linear parts.

The invention will be described in more detail with reference to the accompanying drawings, in which Figure 1 illustrates the principle of automatic control of the radiator supply temperature, Figure 2 illustrates an example of a graph of the supply temperature as a function of the outdoor temperature, and Figure 3 illustrates a device for adjusting the room temperature according to the invention.

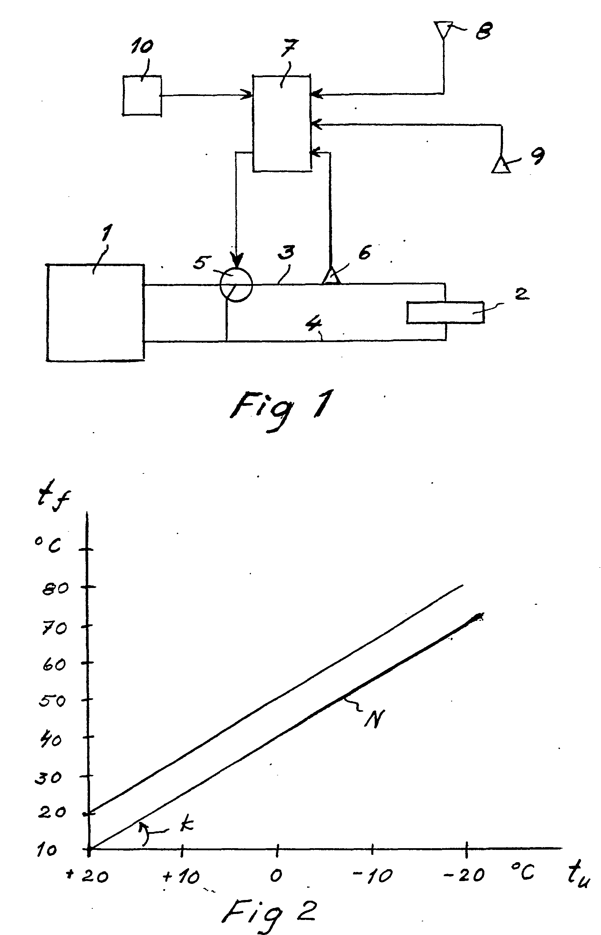

Figure 1 illustrates the principle of controlling the supply temperature and thus the room temperature. The heating system comprises a heating boiler 1 and radiators 2 connected thereto via a supply line 3 and a return line 4. The lines 4 and 5 are interconnected by a shunt line and a shunt valve 5. The shunt valve is actuatable by a regulator 7 so as to admit more or less hot water through the supply line 3 to the radiators 2. A sensor 6 is connected to the supply line for sensing the temperature therein. The sensed temperature value is transmitted to the regulator 7, and so is the value of the outdoor temperature as sensed by a sensor 8, which is connected to the regulator and located outside the house. The room temperature as sensed by a room sensor 9 is also transmitted to the regulator. In addition, a trimming device 10 for manual actuation by the consumer is connected to the regulator.

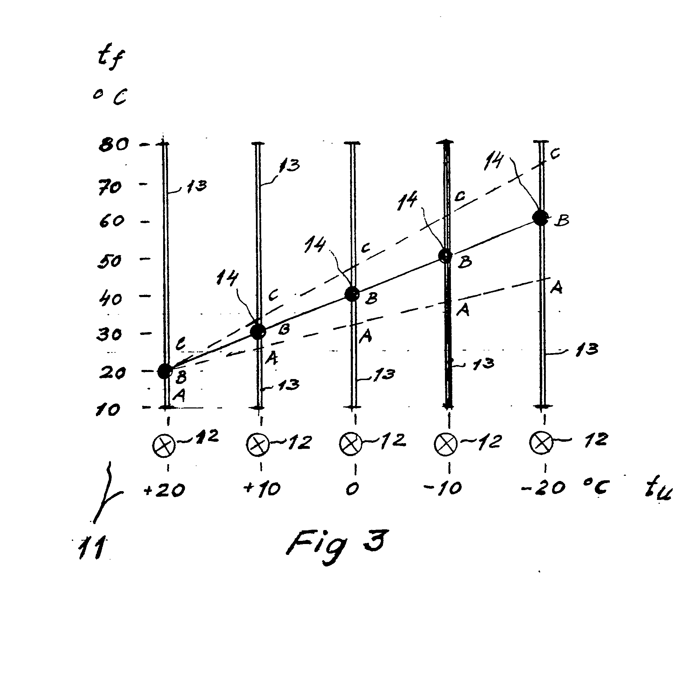

As mentioned in the introduction, the supply temperature as a function of the outdoor temperature is usually assumed to be a straight line, the inclination of which is dependent on the design and geographical location of the house, the climate etc. Such a graph is shown in Figure 2. As has also been mentioned above, in spite of the automatic control, it is sometimes preferable to change the inclination k of the graph, and to move the graph in parallel from its normal position N which can be made by means of the adjusting device 10.

Figure 3 illustrates an arrangement by means of which such adjustment can be made. On the graph 11 provided on the control panel of the boiler and showing the supply temperature tf as a function of the outdoor temperature tu, indicator means 12 such as light emitting diodes are provided at predetermined intervals along the outdoor temperature axis. The light emitting diode 12 corresponding to a certain outdoor temperature is on. In the graph, a slide control 13 such as a slide potentiometer is provided parallel to the supply temperature axis adjacent each indicator means. The position of the operating means 14 of the control corresponds to a point on a line of the graph. Sliding of the potentiometer causes an increase of decrease of the room temperature.

In the illustrated example, the outdoor temperature within the region of +20°C to −20°C is divided in intervals of 10°C, each interval having one light emitting diode. The appurtenant five slide potentiometers are provided in each respective interval and parallel to the supply temperature axis. In this case, the device operates in accordance with the graph defined by the four linear portions. Outside the shown interval of +20°C to −20°C the control takes place in accordance with the respective extrapolated graph. If the consumer considers the room temperature to be improper, all he has to do is to observe which light emitting diode that is on and to actuate the corresponding potentiometer to a warmer or colder position. By means of the above described arrangement it is thus possible for the consumer to adjust the room temperature to the preferred level in a simple and rapid manner.

## Claims

1. Boiler control device for adjusting the temperature of the liquid supplied to the radiators in an automatic control equipment of a heating boiler (1), comprising a regulator (7), a first sensor (8) for sensing the outdoor temperature, and a second sensor (6) for sensing the radiator supply temperature, both sensors being connected to the regulator (7) which is arranged to actuate the shunt valve (5) of the boiler (1), the radiator supply temperature being controlled in relation to the outdoor temperature according to a graph the inclination of which may be altered and which may be displaced in parallel from its normal position in relation to the construction and geographic location of the house, and climatic conditions, characterized in that it comprises at least three indicator means (12) each defining a predetermined interval of the outdoor temperature ($t_u$), said indicator means being adopted to be actuated by the temperature sensed by the outdoor sensor (8) for the respective interval and thereby indicating that the currently sensed outdoor temperature is within the interval associated therewith and at least three adjusting devices (13), one for each interval, and each adjusting device being only in function when the respective indicator indicating that the outdoor temperature lies within the interval associated with the adjusting device, each adjusting device comprising a slidable means (14), having an independently adjustable position for increasing or decreasing the supply temperature, the position corresponding to a point on a graph of the supply temperature ($t_f$) as a function of the outdoor temperature ($t_u$), so that the graph is formed by individual linear parts between neighbouring points, each linear part having an inclination independent of the other linear parts.

2. Boiler control device according to claim 1, characterized in that the indicator means (12) are arranged along the outdoor temperature axis in the supply-outdoor temperature graph, and that the adjusting devices (13) of the respective indicator means are arranged parallel to the supply temperature axis.

3. Boiler control device according to claim 2, characterized in that the indicator means (12) comprise light emitting diodes.

4. Boiler control device according to claim 2, characterized in that the adjusting devices (13) comprise slide potentiometers.

## Patentansprüche

1. Kesselsteuereinrichtung zum Einstellen der Temperatur der den Heizkörpern zugeführten Flüssigkeit in einer automatischen Steuerausrüstung eines Heizkessels (1), mit einem Stellglied (7), einem ersten Sensor (8) zum Erfassen der Außentemperatur und einem zweiten Sensor (6) zum Erfassen der Zufuhrtemperatur für den Hiezkörper, wobei beide Sensoren mit dem Stellglied (7) verbunden sind, welches so angeordnet ist, daß es das Nebenschlußventil (5) des Kessels (1) betätigt, wobei die Heizkörperzufuhrtemperatur (Vorlauftemperatur) relativ zur Außentemperatur entsprechend einer Kurve gesteuert wird, deren Steigung geändert werden kann und welche aus ihrer normalen Stellung entsprechend der Konstruktion und der geographischen Lage des Hauses und entsprechend den klimatischen Bedingungen parallel verschoben werden kann, dadurch genennzeichnet, daß sie zumindest drei Anzeigeeinrichtungen (12) aufweist, von denen jede ein vorbestimmtes Intervall der Außentemperatur ($t_u$) definiert, wobei die Anzeigeeinrichtungen so ausgelegt sind, daß sie durch die von dem Außensensor (8) erfaßte Temperatur für das betreffende Intervall ausgelöst werden und damit anzeigen, daß die gerade erfaßte Außentemperatur innerhalb des damit verknüpften Intervalls liegt, und zumindest drei Einstelleinrichtungen (13) aufweist, und zwar eine für jedes Intervall, wobei jede Einstelleinrichtung nur dann in Betrieb ist, wenn der entsprechende Anzeiger anzeigt, daß die Außentemperatur innerhalb des mit der Einstelleinrichtung verknüpften Intervalls liegt, wobei jede Einstelleinrichtung eine gleitbare Einrichtung (14) aufweist, die eine unabhängig einstellbare Stellung zum Steigern oder Herabsenken der Zufuhrtemperatur hat, wobei die Stellung einem Punkt auf einer Kurve der Zufuhrtemperatur ($t_f$) als Funktion der Außentemperatur ($t_u$) entspricht, so daß die Kurve durch individuelle lineare Abschnitte zwischen benachbarten Punkten gebildet wird und jeder lineare Abschnitt eine Steigung hat, die unabhängig von der der anderen linearen Abschnitte ist.

2. Kesselsteuereinrichtung nach Anspruch 1, dadurch gekennzeichnet, daß die Anzeigeeinrichtungen (12) entlang der Außentemperaturachse der Zufuhr-Außentemperaturkurve angeordnet sind und daß die Einstelleinrichtungen (13) der jeweiligen Anzeigeeinrichtungen parallel zu der Zufuhrtemperaturachse angeordnet sind.

3. Kesselsteuereinrichtung nach Anspruch 2, dadurch gekennzeichnet, daß die Anzeigeeinrichtungen (12) Leuchtdioden aufweisen.

3

4. Kesselsteuereinrichtung nach Anspruch 2, dadurch gekennzeichnet, daß die Einstelleinrichtungen (13) Schiebepotentiometer aufweisen.

## Revendications

1. Dispositif de commande de chaudière, destiné à régler la température du liquide alimenté aux radiateurs dans une installation de commande automatique d'une chaudière de chauffage (1), comprenant un régulateur (7), un premier capteur (8) destiné à déceler la température extérieure et un second capteur (6) destiné à déceler la température d'alimentation des radiateurs, ces deux capteurs étant reliés au régulateur (7) qui est agencé pour commander la vanne de dérivation (5) de la chaudière (1), la température d'alimentation des radiateurs étant réglée en relation avec la température extérieure suivant un graphique dont l'inclinaison peut être modifiée et qui peut être déplacé parallèlement depuis sa position normale en relation avec la construction et la localisation géographique du bâtiment, et les conditions climatiques, caractérisé en ce qu'il comprend au moins trois dispositifs indicateurs (12) définissant chacun un intervalle prédéterminé de température extérieure ($t_u$), ces dispositifs indicateurs étant destinés à être commandés par la température décelée par le capteur extérieure (8) pour l'intervalle correspondant et indiquant ainsi que la température extérieure normalement décelée se situe dans l'intervalle associé, et au moins trois dispositifs de régale (13), un pour chaque intervalle, chaque dispositif de réglage n'étant en fonction que lorsque l'indicateur correspondant indique que la température extérieure se situe dans l'intervalle associé au dispositif de réglage, chaque dispositif de réglage comprenant un dispositif à glissement (14) présentant une position réglable indépendamment pour augmenter ou diminuer la température d'alimentation, la position correspondant à un point sur un graphique de la température d'alimentation ($t_f$) en fonction de la température extérieure ($t_u$), de sorte que le graphique est formé par des parties linéaires individuelles entre des points voisins, chaque partie linéaire ayant une inclinaison indépendante des autres parties linéaires.

2. Dispositif de commande de chaudière suivant la revendication 1, caractérisé en ce que les dispositifs indicateurs (12) sont agencés le long de l'axe des températures extérieures dans la graphique entre la température d'alimentation et la température extérieure, et en ce que les dispositifs de réglage (13) des dispositifs indicateurs correspondants sont agencés parallèlement à l'axe des températures d'alimentation.

3. Dispositif de comamnde de chaudière suivant la revendication 2, caractérisé en ce que les dispositifs indicateurs (12) sont des diodes électroluminescentes.

4. Dispoitif de commande de chaudière suivant la revendication 2, caractérisé en ce que les dispositifs de réglage (13) consistent en des potentiomètres à curseur.

Fig 1

Fig 2

Fig 3